(19) Europäisches Patentamt / European Patent Office / Office européen des brevets

(11) **EP 3 065 931 B1**

(12) **FASCICULE DE BREVET EUROPEEN**

(45) Date de publication et mention
de la délivrance du brevet:
**08.05.2019 Bulletin 2019/19**

(21) Numéro de dépôt: **14799365.3**

(22) Date de dépôt: **04.11.2014**

(51) Int Cl.:
*B29C 51/14* (2006.01)     *B29C 51/26* (2006.01)
*B29C 70/54* (2006.01)     *B29K 101/12* (2006.01)

(86) Numéro de dépôt international:
**PCT/EP2014/073617**

(87) Numéro de publication internationale:
**WO 2015/067572 (14.05.2015 Gazette 2015/19)**

(54) **DISPOSITIF ET PROCÉDÉ POUR L'ESTAMPAGE D'UN FLAN COMPOSITE À MATRICE THERMOPLASTIQUE**

VORRICHTUNG UND VERFAHREN ZUR HERSTELLUNG EINER VERBUNDPLATTE AUS EINER THERMOPLASTISCHEN MATRIX

DEVICE AND METHOD FOR FORMING A COMPOSITE PANEL FROM A THERMOPLASTIC MATRIX

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **09.11.2013 FR 1360992**

(43) Date de publication de la demande:
**14.09.2016 Bulletin 2016/37**

(73) Titulaire: **Daher Aerospace**
**41400 Saint Julien De Chedon (FR)**

(72) Inventeur: **ZAWADKA, Laurent**
**F-44680 Sainte Pazane (FR)**

(74) Mandataire: **Ipside**
**29, rue de Lisbonne**
**75008 Paris (FR)**

(56) Documents cités:
**FR-A1- 2 354 870     FR-A1- 2 417 378**
**FR-A1- 2 922 276**

**Description**

L'invention concerne un dispositif et un procédé pour l'estampage d'un flan composite à matrice thermoplastique. L'invention est plus particulièrement, mais non exclusivement, adaptée à la transformation d'un flan composite constitué d'une stratification de plis comprenant des fibres de renfort continues, telles que des fibres de carbone, de verre ou d'aramide, sous la forme de tissus ou de nappes non-tissées, dans une matrice constituée d'un polymère thermoplastique tel que du polyéthéréthercétone, ou PEEK, du polysulfone, ou PPS, ou du polyétherimide, ou PEI, sans que ces exemples d'application ne soient exhaustifs. L'invention est plus particulièrement adaptée à l'estampage d'un flan consolidé ou partiellement consolidé.

L'estampage est une opération visant à déformer un brut, essentiellement plan, ou flan, entre une matrice et un effecteur consistant en un poinçon rigide ou une vessie, dans le but de faire épouser la forme de la matrice audit flan afin de lui conférer une forme tridimensionnelle. Dans le cas de l'estampage d'un flan constitué d'un matériau composite à renfort fibreux, sous la forme de fibres continues, cette modification de forme implique des glissements inter laminaires entre les plis et, localement, des modifications de la distance entre les fibres, dans des proportions maîtrisées, pour passer de la configuration plane à la configuration en forme, les fibres n'étant pas aptes à se déformer plastiquement. Ces déplacements inter et intra-laminaires des renforts sont rendus possibles par la viscosité de la matrice, laquelle matrice est portée à sa température de fusion pour la réalisation de l'estampage d'un flan à matrice thermoplastique. Ainsi, la séquence typique d'estampage d'un flan composite à matrice thermoplastique, comporte les opérations suivantes :

- le chauffage du flan au-delà de sa température de fusion : cette opération conduit à la déconsolidation du flan qui perd toute sa rigidité. Ainsi, cette opération est généralement réalisée alors que le flan est posé sur un film résistant à la température tel qu'un film polyimide.
- le transfert du flan, avec son film support, sur la matrice, ladite matrice étant généralement préchauffée à une température inférieure à la température de fusion ;
  l'estampage ;
- le refroidissement de la pièce entre le poinçon et la matrice et sa re-consolidation.

Ce procédé de mise en forme donne satisfaction, mais présente des inconvénients, liés notamment à l'utilisation du film polyimide. En effet, estampé avec le flan, ledit film, d'un coût élevé lorsque le polymère constituant la matrice du composite est à haut point de fusion, par exemple du PEEK, ledit film n'est pas réutilisable. De plus, n'étant pas plastique à la température d'estampage, ce film tend à se froisser lors de cette opération, les plis s'imprimant dans la pièce et provoquant des ondulation de fibres.

Le document FR 2 922 276 décrit un procédé et un dispositif pour l'estampage d'un flan usiné composite à matrice thermoplastique consolidé, lequel dispositif utilise un cadre de transfert maintenant le flan sur sa périphérie, sans film support, tant au cours du chauffage que du transfert du flan sur la matrice. Ce même dispositif de l'art antérieur utilise un centreur traversant un alésage pratiqué sur le flan, et qui permet de positionner ledit flan par rapport au cadre. Dans le cadre d'une production industrielle, ce dispositif de l'art antérieur s'avère peu fiable. En effet la perte des propriétés mécaniques du flan lors du chauffage entraîne fréquemment la chute de celui-ci hors du cadre, et même lorsque ledit flan est maintenu par le centreur, l'alésage tend à se déformer autour dudit centreur conduisant à des défauts tels que des essorages, des pincements ou des ondulations de fibres, lesquels défauts, de par la nature continue desdites fibres, sont susceptibles de se propager à des distances éloignées dudit centreur. Au cours de l'estampage, si le flan ne parvient pas à échapper du centreur, celui-ci provoque des déchirures et perturbe le glissement interlaminaire conduisant à des défauts.

Le document FR 2 354 870 décrit un dispositif pour l'emboutissage d'une feuille mince d'un matériau thermoplastique servant de revêtement à un récipient. Une telle feuille mince, non renforcée par des fibres, tend à se contracter lors du chauffage. Pour éviter ce phénomène, ladite feuille est empalée sur des aiguilles sur sa périphérie. Pour éviter la déchirure de la feuille au cours de l'estampage, un serre flan vient coincer les bords de ladite feuille entre les aiguilles et la partie formée. Un tel procédé est inapplicable dans le cas d'un composite renforcé par des fibres continues, le serre flanc empêchant le glissement interlaminaire, indispensable au formage.

Le terme « flan usiné » désigne un flan qui a subi une préparation, notamment par enlèvement de matière, généralement par découpe au jet d'eau haute pression ou par détourage à l'outil coupant, dans le but de lui conférer un contour adapté ou d'y découper des formes particulières tels qu'un alésage ou un évidement.

L'invention vise à résoudre les inconvénients de l'art antérieur et concerne à cette fin un dispositif pour l'estampage d'un flan composite à matrice thermoplastique, en vue du chauffage et de l'estampage dudit flan, lequel dispositif comporte :

    a. un flan usiné ;
    b. un cadre ;
    c. une pluralité de taquets fixés sur ledit cadre et s'étendant vers l'intérieur de celui-ci, délimitant une surface interne d'ouverture du cadre, libre de tout obstacle ;
    d. un centreur solidaire d'un taquet et apte à coopérer avec une lumière usinée dans le flan ;
    e. lequel dispositif comporte, à proximité du centreur, un moyen dissipateur de chaleur.

Ainsi, le moyen dissipateur de chaleur est apte à maintenir localement la température du flan sous la température de fusion du polymère en constituant la matrice au cours du chauffage et du transfert dudit flan, de sorte qu'à proximité du dissipateur de chaleur, le flan n'est pas porté à sa température de fusion, ne foisonne pas et conserve certaines propriétés mécaniques. En conséquence, le centreur assure un maintien efficace dudit flan sans qu'il n'y ait de déformation du flan autour de ce centreur.

L'invention est avantageusement mise en oeuvre selon les modes de réalisation exposés ci-après, lesquels sont à considérer individuellement ou selon toute combinaison techniquement opérante.

Avantageusement le dispositif dissipateur de chaleur est constitué par le taquet supportant le centreur. Ce mode de réalisation est particulièrement simple et économique de mise en oeuvre.

Avantageusement, le taquet dissipateur de chaleur est constitué d'un matériau dont l'effusivité thermique est supérieure ou égale à 10 fois l'effusivité thermique du polymère constituant la matrice du flan. Ainsi, ledit taquet produit un refroidissement efficace de la face du flan avec laquelle il est en contact.

Avantageusement, le taquet comporte un traitement de surface pour limiter son absorption du rayonnement infra-rouge. Ce mode de réalisation, compatible avec le précédent, est avantageux lorsque le chauffage du flan, préalablement à son estampage, est réalisé par des panneaux radians. Ainsi, ledit taquet ne subit pas, ou peu, le chauffage par la source de chaleur.

Avantageusement, le flan comporte en périphérie :
ai. une lumière, dite de guidage, non occupée par un centreur lorsque ledit flan est sur le cadre.

Ainsi, cette lumière de guidage est apte à orienter le flan en regard de la matrice après que ledit flan ait été transféré sur l'outillage d'estampage.

Avantageusement, le dispositif objet de l'invention comporte :
f. une matrice d'estampage dont le périmètre, selon un plan dit de fermeture, est apte à s'inscrire dans la surface d'ouverture interne du cadre.

Ainsi, le flan est avantageusement transféré sur ladite matrice au moyen du cadre, lequel cadre est apte à s'escamoter pour ne pas gêner l'estampage.

Avantageusement, la matrice d'estampage comporte :
fi. un doigt de centrage apte à coopérer avec la lumière de guidage du flan.

Ainsi, les moyens de guidage et de positionnement de la matrice prennent le relai des moyens de positionnement du cadre, une fois que celui-ci est escamoté.

Avantageusement, la lumière de guidage du flan est une lumière oblongue. Ainsi, ladite lumière permet le positionnement du flan par rapport à la matrice tout en autorisant le glissement de celui-ci dans le sens de l'estampage. L'invention concerne également un procédé pour l'estampage d'un flan composite comprenant un renfort fibreux continu dans une matrice thermoplastique, utilisant un dispositif selon l'invention, lequel procédé comporte les étapes consistant à :

i. régler la position des taquets sur le cadre en fonction de la géométrie du flan ;
ii. poser le flan sur les taquets en engageant le centreur dans l'alésage du flan ;
iii. chauffer le flan posé sur les taquets du cadre à une température égale ou supérieure à la température de fusion de la matrice thermoplastique du flan composite ;
iv. transférer le flan maintenu sur les taquets sur la matrice au moyen du cadre ;
v. désolidariser le cadre du flan en engageant le doigt de centrage de la matrice dans la lumière oblongue
vi. estamper le flan.

Ainsi le procédé objet de l'invention permet de chauffer et de tansférer le flan sur l'outillage, sans être gêné par aucun support de flan au cours de l'estampage. Ainsi, la qualité mécanique des pièces obtenues par ce procédé est améliorée en regard des procédés d'estampage de l'art antérieur.

Avantageusement, le procédé objet de l'invention comporte avant l'étape i) une étape consistant à :
vii. usiner la lumière oblongue dans le flan de sorte à ce que le grand axe de ladite lumière soit orienté parallèlement à la direction de glissement du flan au cours de l'estampage.

Ainsi, le flan est parfaitement positionné par rapport à la matrice, mais aucun obstacle ne vient gêner le glissement interlaminaire des plis durant l'opération d'estampage.

L'invention est exposée ci-après selon ses mode de réalisation préférés, nullement limitatifs, et en référence aux figures 1 à 6 dans lesquelles :

- la figure 1 montre, selon une vue dessus, un exemple de réalisation d'un flan usiné selon un mode de réalisation du dispositif objet de l'invention ;
- la figure 2 représente selon une vue partielle en perspective un exemple de réalisation d'un cadre de transfert comprenant un taquet et des moyens de centrage du flan ;
- la figure 3 est une vue de dessus d'un exemple de réalisation d'un cadre de transfert assemblé ;
- la figure 4 illustre, selon une vue de face en coupe, les phases de chauffage et d'estampage d'un flan composite utilisant un exemple de réalisation du dispositif objet de l'invention ;
- la figure 5 montre, selon une vue partielle en perspective et en éclaté, un exemple de réalisation du dispositif objet de l'invention ;

- et la figure 6 est un logigramme du procédé objet de l'invention.

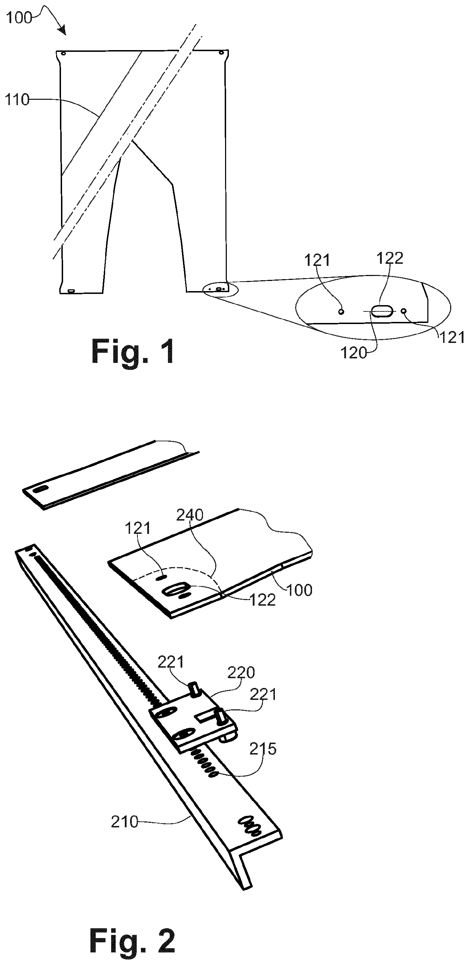

Figure 1, selon un exemple de réalisation du dispositif objet de l'invention, celui-ci comporte un flan (100) composite usiné consolidé. Ledit flan (100) est constitué d'un ou plusieurs plis stratifiés comportant des renforts fibreux (110) continus, c'est-à-dire qui s'étendent d'une extrémité à l'autre dudit flan (100), dans une matrice constituée d'un polymère thermoplastique. Ce flan est dit usiné, c'est-à-dire que préalablement à sa mise en oeuvre par estampage, il est détouré selon un contour défini. Ledit détourage est réalisé par tout procédé connu de l'art antérieur, notamment, mais non exclusivement, par l'intermédiaire d'un outil coupant ou par un jet d'eau à haute pression. Ces opérations de détourage comporte la réalisation de lumières (121, 122) destinée à recevoir de éléments de positionnement dudit flan (100) dans un référentiel d'outillage.

Figure 2, pour son transfert, du poste de chauffage à l'outillage d'estampage, le flan (100) est supporté par un cadre constitué, selon cet exemple de réalisation, d'un assemblage de cornières (210). Tout ou partie desdites cornières comprennent des moyens (215) pour fixer, sur lesdites cornières (210), un taquet (220). Ainsi, selon un exemple de réalisation, une pluralité de taquets (220) de ce type sont fixés sur la périphérie du cadre. Selon cet exemple de réalisation, deux centreurs (221) sont fixés audit taquet (220). Lesdits centreurs (221) sont aptes à coopérer avec des lumières (121) usinées dans le flan (100), de sorte à positionner ledit flan par rapport au cadre. Ainsi, la partie du flan (100) à proximité des centreurs (221), lorsque le flan (100) est installé sur le cadre, est en contact avec le taquet (220). Avantageusement le taquet est constitué d'un matériau métallique dont l'effusivité thermique est au moins 10 fois supérieure à l'effusivité thermique du polymère constituant la matrice du flan (100) composite. L'effusivité thermique « E » est définie par la relation :

$$E = \sqrt{\lambda . \rho . C}$$

où $\lambda$ est le coefficient de conductivité thermique du matériau, p sa masse volumique et C sa chaleur spécifique. L'effusivité thermique d'un matériau quantifie sa capacité à échanger de la chaleur avec son environnement. Ainsi l'effusivité thermique du PEEK est de l'ordre 330 J.$K^{-1}$.$m^{-2}$.$s^{-1/2}$, l'effusivité thermique du cuivre est de l'ordre de 36 000 J.$K^{-1}$.$m^{-2}$.$s^{-1/2}$, celle de l'acier, de l'ordre de 14 000 J.$K^{-1}$.$m^{-2}$.$s^{-1/2}$. Lorsqu'un premier matériau d'effusivité thermique $E_1$ est porté à la température $T_1$, puis est mis en contact avec un second matériau, d'effusivité thermique $E_2$ à la température $T_2$, la température $T$ immédiate (en négligeant la résistance de contact) à l'interface des deux matériaux est donnée par la relation :

$$T = \frac{E_1 T_1 + E_2 T_2}{E_1 + E_2}$$

Ainsi, dans l'exemple de réalisation où le polymère constituant la matrice du flan est un PEEK, le taquet (220) est par exemple constitué d'acier et son effusivité thermique est 40 fois supérieure à celle du PEEK. Ainsi le taquet absorbe par conduction la chaleur du flan au voisinage des centreurs, de sorte que la zone (240) du flan, sensiblement en contact avec le taquet (220), n'est pas portée à la température de fusion de la matrice lors du chauffage préalable à l'estampage dudit flan. Ainsi, les plis de la stratification du flan restent solidaires entre eux au voisinage du centreur (221), et la lumière (121), habitée par ledit centreur, ne se déforme pas lorsque le reste du flan est porté à la température de fusion de la matrice. Le flan (100) reste par conséquent bien maintenu et bien positionné dans le cadre par les taquets et les centreurs (221), ce qui permet de réaliser le transfert du flan de la zone de chauffage vers l'outillage d'estampage sans risque de désolidarisation du flan et du cadre, et d'autre part de conserver le positionnement du flan et de maîtriser ce positionnement par rapport à l'outillage d'estampage.

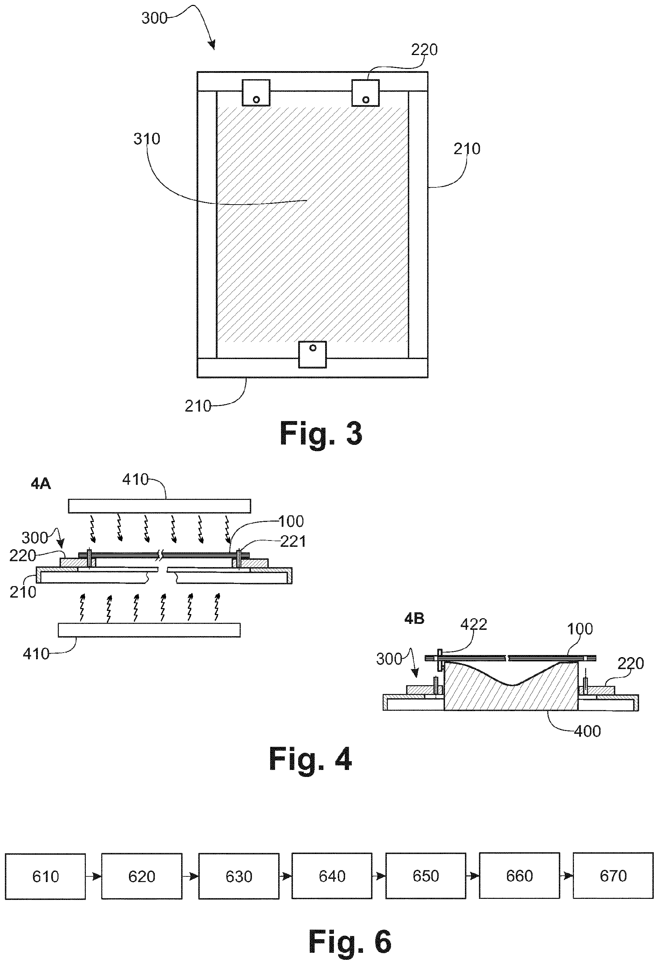

Figure 3, selon un exemple de réalisation du dispositif objet de l'invention, le cadre (300) de transfert est constitué par l'assemblage de profilés (210) notamment des cornières, sur lesquels sont fixés les taquets (220). Le flan repose sur lesdits taquets qui s'étendent vers l'intérieur du cadre et qui, avec les cornières (210) définissent un espace (310) interne d'ouverture libre de tout obstacle.

En revenant à la figure 2, les moyens (215) de fixation des taquets (220) permettent de régler la position des taquets (220) sur le cadre en fonction de la forme du flan et de ses dimensions.

Figure 4A, selon un exemple de réalisation du procédé objet de l'invention, préalablement à son estampage, le flan (100) consolidé, positionné sur les taquets (220) du cadre (300) est chauffé jusqu'à la température de fusion de la matrice au moyen d'un ou plusieurs panneaux (410) radiants. Durant cette phase de chauffage, le polymère situé dans la zone du flan au contact avec les taquets (220) n'est pas porté à sa température de fusion, et les portions de plis concernées conservent leur cohésion interlaminaire dans cette zone. Selon cet exemple de réalisation, utilisant de panneaux (410) radiants comme moyen de chauffage, afin que les taquets (220) ne soient pas, eux-mêmes, chauffés par radiation, lesdits taquets (220), mais aussi le cadre de transfert, font avantageusement l'objet d'un traitement de surface de sorte à limiter leur absorption du rayonnement infrarouge. À titre d'exemple non limitatif, lesdits taquets sont polis ou font l'objet d'un chromage brillant ou d'un revêtement réfléchissant.

Figure 4B, le flan est transféré sur la matrice (400) d'estampage au moyen du cadre (300). La matrice (400) d'estampage s'inscrit dans l'ouverture libre (310, figure 3) du cadre de sorte que le cadre et le flan sont désolidarisés facilement, le cadre (300) d'escamotant en coulissant sur les bords de la matrice (400) d'estampage, selon cet exemple de réalisation. Durant la pose du flan (100) sur la matrice (400) d'estampage, un doigt (422) de guidage, fixé à ladite matrice (400) d'estampage, pénètre dans la lumière oblongue (122, figure 1) du flan.

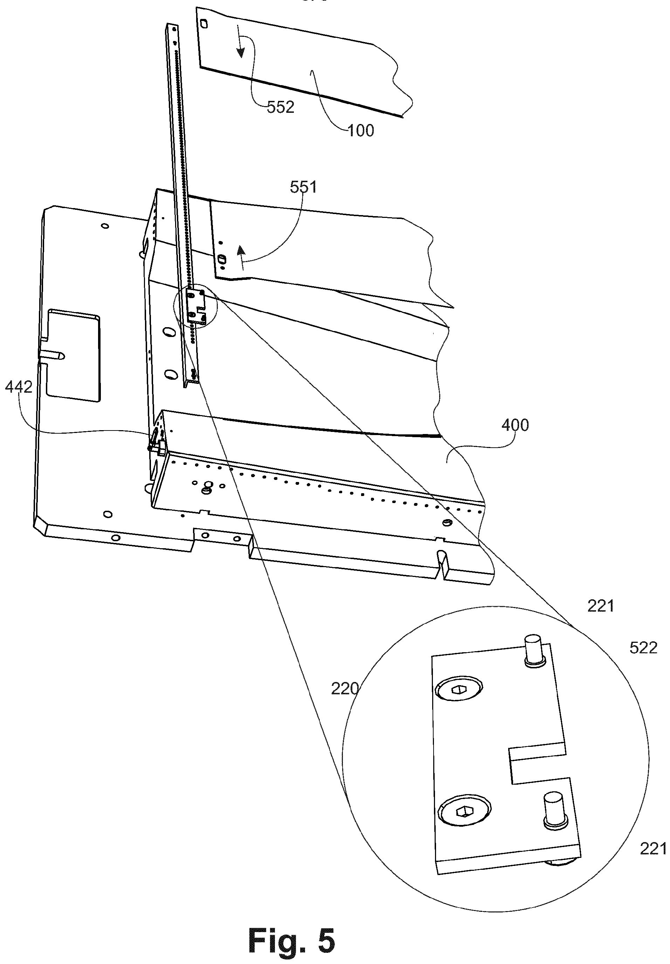

Figure 5, afin d'assurer le passage de du doigt (422) de centrage de la matrice (400) d'estampage, le taquet (220) comporte, selon un exemple de réalisation, une rainure (522) autorisant le passage dudit doigt (422) sans gêner l'escamotage du cadre. Selon cet exemple de réalisation avantageux, le taquet (220) comporte deux centreurs (221) qui coopèrent avec des lumières cylindriques (121, figure 1) du flan situées de part et d'autre de la lumière oblongue. Ainsi, lors du transfert et avant l'escamotage du cadre ladite lumière oblongue, située dans une zone du flan qui conserve sa cohésion après chauffage, est parfaitement positionnée par rapport au doigt (422) de centrage.

Après avoir été positionné par rapport à la matrice (400) le flan (100) est immédiatement estampé par un poinçon rigide ou une vessie de sorte à le conformer à la forme de l'empreinte de la matrice. Au cours de cette opération d'estampage, la matière constituant le flan subit des glissements (551, 552) de direction et d'amplitude variable sur la surface du flan, fonction de la forme de l'empreinte.

En revenant à la figure 1, le grand axe (120) de la lumière oblongue (122) est avantageusement orienté de telle sorte à autoriser un déplacement relatif du flan par rapport au doigt de centrage de la matrice, parallèlement à la direction de glissement au cours de l'estampage dans la zone considérée.

Figure 6, le procédé objet de l'invention comprend les étape consistant à :

-    détourer (610) le flan. Ledit flan est ainsi avantageusement découper en panoplie dans une plaque constituée d'un matériau composite à matrice thermoplastique consolidé. Une telle plaque est facile à manipuler et à usiner. Cet usinage comprend la réalisation de la lumière oblongue, l'orientation et la longueur de cette lumière sont déterminées par l'expérience.
-    Régler (620) les taquets sur le cadre, le nombre de taquets et leur position est déterminé par l'expérience.
-    Poser (630) le flan sur les taquets.
-    Transférer le flan et le cadre sous des moyens de chauffage et chauffer (640) le flan jusqu'à la température de fusion du polymère constituant la matrice dudit flan.
-    Transférer et poser (650) le flan sur la matrice d'estampage en engageant le doigt de centrage dans la lumière oblongue.

-    Escamoter(660) le cadre de transfert.
-    Estamper (670) le flan.

La description ci-avant et les exemples de réalisation montrent que l'invention atteint les objectifs visés, en particulier elle permet de chauffer un flan sur un cadre de transfert, en vue de l'estampage à chaud dudit flan, en assurant un maintien efficace du flan sur le cadre au cours du transfert, un positionnement précis du flan par rapport à la matrice de formage, dans gêner l'opération d'estampage.

## Revendications

1.    Dispositif pour la mise en forme d'un flan (100) composite à matrice thermoplastique renforcé par des fibres continues de carbone de verre ou d'aramide, lequel flan comporte des lumières (121, 122) usinées, destinées à recevoir de éléments de positionnement dudit flan (100) lors de son chauffage et de son estampage, lequel dispositif comporte :

    b. un cadre (300) ;
    c. une pluralité de taquets (220), réglables en position, fixés sur ledit cadre et s'étendant vers l'intérieur de celui-ci, délimitant une surface (310) interne d'ouverture du cadre, libre de tout obstacle ;
    d. un centreur (221) solidaire d'un taquet et apte à coopérer avec une lumière (121) usinée dans le flan (100) ;
    e. **caractérisé en ce que** le taquet (220) comportant le centreur (221) est constitué d'un matériau dont l'effusivité thermique est au moins 10 fois supérieure à l'effusivité thermique du polymère constituant la matrice du flan (100), de sorte que ledit taquet constitue un dissipateur de chaleur.

2.    Dispositif selon la revendication 1, dans lequel le taquet (220) comporte un traitement de surface pour limiter son absorption du rayonnement infra-rouge.

3.    Dispositif selon la revendication 1, comportant :
    f. une matrice (400) d'estampage dont le périmètre, selon un plan dit de fermeture, est apte à s'inscrire dans la surface (310) d'ouverture interne du cadre (300).

4.    Dispositif selon la revendication 3, dans lequel les lumières usinées du flan (100) comportent en périphérie, une lumière oblongue (122) dite de guidage, non occupée par un centreur lorsque ledit flan est solidaire du cadre (300), et que la matrice (400) d'estampage comporte :
    fi. un doigt (422) de centrage apte à coopérer avec la lumière (122) de guidage du flan (100).

**5.** Utilisation du dispositif selon la revendication 4, pour la mise en oeuvre d'un procédé d'estampage d'un flan composite (100), **caractérisé en ce que** ledit procédé comporte les étapes consistant à :

i. régler (620) la position des taquets (220) sur le cadre (300) en fonction de la géométrie du flan (100) ;
ii. poser (630) le flan (100) sur les taquets (220) en engageant le centreur (221) dans l'alésage (121) du flan ;
iii. chauffer (640) le flan (100) posé sur les taquets (220) du cadre à une température égale ou supérieure à la température de fusion de la matrice thermoplastique du flan composite ;
iv. transférer (650) le flan maintenu sur les taquets sur le matrice au moyen du cadre
v. désolidariser (660) le cadre (300) du flan (100) en engageant le doigt (422) de centrage de la matrice dans la lumière (122) oblongue
vi. estamper (670) le flan.

**6.** Utilisation selon la revendication 5, du dispositif la revendication 4 dans laquelle le procédé d'estampage comprend avant l'étape i) une étape consistant à :

vii. usiner (610) la lumière oblongue dans le flan (100) de sorte à ce que le grand axe (120) de ladite lumière (122) soit orienté parallèlement à la direction (551) de glissement du flan au cours de l'estampage.

**Patentansprüche**

**1.** Vorrichtung zum Umformen eines Verbundstoffrohlings (100) mit thermoplastischer Matrix, die durch durchgehende Kohle-, Glas- oder Aramidfasern verstärkt ist, wobei der Rohling gespante Löcher (121, 122) umfasst, die dazu vorgesehen sind, Elemente zum Positionieren des Rohlings (100) bei dessen Erhitzen und dessen Prägen aufzunehmen, wobei die Vorrichtung umfasst:

b. einen Rahmen (300);
c. eine Vielzahl von positionsverstellbaren Anschlägen (220), die am Rahmen befestigt sind und sich zur Innenseite desselben hin erstrecken, die eine innere Öffnungsfläche (310) des Rahmens begrenzen, welche frei von jedem Hindernis ist;
d. einen Zentrierer (221), der fest mit einem Anschlag verbunden und in der Lage ist, mit einem gespanten Loch (121) im Rohling (100) zusammenzuwirken;
e. **dadurch gekennzeichnet, dass** der Anschlag (220), der den Zentrierer (221) umfasst, aus einem Material besteht, dessen Wärmeeindringkoeffizient mindestens 10 Mal höher ist als der Wärmeeindringkoeffizient des Polymers, aus dem die Matrix des Rohlings (100) besteht, sodass der Anschlag einen Wärmeableiter bildet.

**2.** Vorrichtung nach Anspruch 1, wobei der Anschlag (220) eine Oberflächenbehandlung umfasst, um seine Absorption der Infrarotstrahlung zu begrenzen.

**3.** Vorrichtung nach Anspruch 1, umfassend:
f. eine Prägematrize (400), deren Umfang gemäß einer so genannten Schließebene in der Lage ist, sich in die innere Öffnungsfläche (310) des Rahmens (300) einzufügen.

**4.** Vorrichtung nach Anspruch 3, wobei die gespanten Löcher des Rohlings (100) am Umfang ein so genanntes Führungslangloch (122) umfassen, das nicht von einem Zentrierer belegt wird, wenn der Rohling fest mit dem Rahmen (300) verbunden ist, und die Prägematrize (400) umfasst:
fi: einen Zentrierstift (422), der in der Lage ist, mit dem Führungsloch (122) des Rohlings (100) zusammenzuwirken.

**5.** Verwendung der Vorrichtung nach Anspruch 4 zum Umsetzen eines Verfahrens zum Prägen eines Verbundstoffrohlings (100), **dadurch gekennzeichnet, dass** das Verfahren die Schritte umfasst, die bestehen im:

i. Einstellen (620) der Position der Anschläge (220) am Rahmen (300) abhängig von der Geometrie des Rohlings (100);
ii. Legen (630) des Rohlings (100) auf die Anschläge (220) unter Eingreifen des Zentrierers (221) in die Bohrung (121) des Rohlings;
iii. Erhitzen (640) des auf die Anschläge (220) des Rahmens gelegten Rohlings (100) auf eine Temperatur, die gleich oder größer als die Schmelztemperatur der thermoplastischen Matrix des Verbundstoffrohlings ist;
iv. Transferieren (650) des auf den Anschlägen gehaltenen Rohlings mittels des Rahmens über die Matrize
v. Lösen (660) des Rahmens (300) vom Rohling (100) unter Eingreifen des Zentrierstifts (422) der Matrize in das Langloch (122)
vi. Prägen (670) des Rohlings.

**6.** Verwendung nach Anspruch 5 der Vorrichtung Anspruch 4, wobei das Prägeverfahren vor dem Schritt i) einen Schritt umfasst, der besteht im:
vii. Spanen (610) des Langlochs im Rohling (100), sodass die Hauptachse (120) des Lochs (122) parallel zur Verschieberichtung (551) des Rohlings im Laufe des Prägens ausgerichtet ist.

**Claims**

1. Device for forming a composite panel (100) from a thermoplastic matrix reinforced with continuous carbon, glass or aramid fibers, said panel comprising machined holes (121, 122), intended to receive elements for positioning said panel (100) during the heating and forming thereof, said device comprising:

   b. a frame (300);
   c. a plurality of cleats (220), adjustable in position, fixed onto said frame and extending into the interior thereof, delimiting an internal opening surface (310) of the frame, free from any obstacle;
   d. a centering device (221) rigidly connected to one cleat and suitable for engaging with a hole (121) machined in the panel (100);
   e. **characterized in that** the cleat (220) comprising the centering device (221) is formed from a material wherein the thermal diffusivity is at least 10 times greater than the thermal diffusivity of the polymer forming the matrix of the panel (100), such that said cleat forms a heat sink.

2. Device according to claim 1, wherein the cleat (220) comprises a surface treatment to limit the infrared radiation absorption thereof.

3. Device according to claim 1, comprising:
   f. a forming die (400) wherein the perimeter, along a so-called closing plane, is suitable for fitting in the internal opening surface (310) of the frame (300).

4. Device according to claim 3, wherein the holes machined in the panel (100) comprise at the periphery an oblong so-called guiding hole (122), not occupied by a centering device when said panel is rigidly connected to the frame (300, and the forming die (400) comprises:
   fi. a centering pin (422) suitable for engaging with the guiding hole (122) of the panel (100).

5. Use of the device according to claim 4, for implementing a method for forming a composite panel (100) **characterized in that** said method comprises steps consisting of:

   i. adjusting (620) the position of the cleats (220) on the frame (300) according to the geometry of the panel (100);
   ii. placing (630) the panel (100) on the cleats (220) by inserting the centering device (221) into the hole (121) of the panel;
   iii. heating (640) the panel (100) placed on the cleats (220) of the frame to a temperature equal to or greater than the melting point of the thermoplastic matrix of the composite panel;
   iv. transferring (650) the panel held on the cleats onto the die by means of the frame
   v. detaching (660) the frame (300) from the panel (100) by inserting the centering pin (422) of the die into the oblong hole (122)
   vi. forming (670) the panel.

6. Use according to claim 5, of the device claim 4 wherein the forming method comprises prior to step i) a step consisting of:
   vii. machining (610) the oblong hole in the panel (100) such that the major axis (120) of said hole (122) is oriented parallel with the sliding direction (551) of the panel during forming.

100

110

121  122

121

120

**Fig. 1**

240

121

122  100

221  220

221

215

210

**Fig. 2**

**Fig. 3**

**Fig. 4**

**Fig. 6**

**Fig. 5**

## RÉFÉRENCES CITÉES DANS LA DESCRIPTION

**Documents brevets cités dans la description**

- FR 2922276
- FR 2354870